(19) Europäisches Patentamt
European Patent Office
Office européen des brevets

(11) **EP 2 735 055 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(21) Anmeldenummer: **12738439.4**

(22) Anmeldetag: **17.07.2012**

(51) Int Cl.:
*H01Q 3/26* (2006.01)      *H01Q 15/16* (2006.01)
*H01Q 19/17* (2006.01)     *H01Q 5/45* (2015.01)
*G01S 13/90* (2006.01)

(86) Internationale Anmeldenummer:
**PCT/EP2012/064000**

(87) Internationale Veröffentlichungsnummer:
**WO 2013/011023 (24.01.2013 Gazette 2013/04)**

(54) **REFLEKTORANTENNE FÜR EIN RADAR MIT SYNTHETISCHER APERTUR**

REFLECTOR ANTENNA FOR A SYNTHETIC APERTURE RADAR

ANTENNE À RÉFLECTEUR POUR UN RADAR À OUVERTURE SYNTHÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2011 DE 102011108159**

(43) Veröffentlichungstag der Anmeldung:
**28.05.2014 Patentblatt 2014/22**

(73) Patentinhaber: **Deutsches Zentrum für Luft- und Raumfahrt e.V.**
**51147 Köln (DE)**

(72) Erfinder:
• **HUBER, Sigurd**
  **80636 München (DE)**
• **KRIEGER, Gerhard**
  **82131 Gauting (DE)**
• **YOUNIS, Marwan**
  **82234 Weßling (DE)**

(74) Vertreter: **von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) Entgegenhaltungen:
**US-A- 5 175 562      US-A- 5 202 700**
**US-A1- 2001 054 984      US-B1- 6 211 842**

EP 2 735 055 B1

**Beschreibung**

Zukünftige satelliten-gestützte Radarsysteme mit Apertur-Synthese sollen auf digitale Strahlformungstechniken zurück greifen. Hierbei werden Teile der analogen Empfangshardware durch digitale Komponenten ersetzt, was die Flexibilität solcher Systeme erhöht. Ziel ist es Radarbilder mit einem großen Aufnahmebereich (d.h. einer großen Streifenbreite) und gleichzeitig hoher Auflösung zu gewinnen. Aufgrund der begrenzten Sendeleistung werden Antennen mit großer Aperturfläche benötigt, die in der Lage sind, die Antennenkeule über einen großen Winkelbereich elektronisch zu steuern. Als innovatives Konzept erweisen sich parabolische Reflektorantennen in Kombination mit insbesondere digitalen Speise-Arrays. Die Anzahl der Antennenelemente und die Größe des Speise-Arrays richten sich nach der Streifenbreite, bzw. nach der Auflösung, die erzielt werden soll. Die Elemente werden dabei in der fokalen Ebene des Reflektors platziert. Ein solches SAR-System ist z.B. in US 6 175 326 B1 oder US-A-2007/0194977 beschrieben.

Eine inhärente Problematik solcher Antennen-Konzepte ist, dass jedes Antennenelement des Speise-Arrays nur einen kleinen Winkelbereich "sieht" (beleuchtet). Da sich die "Sichtbereiche" der einzelnen Antennenelemente des Speise-Arrays kaum überlappen, ergibt sich im Falle eines Speise-Element-Ausfalls ein "blinder" Bereich.

Reflektorantennen werden typischerweise in den Bauformen als Paraboloid, als parabolischer Zylinder oder als Winkelreflektor realisiert. Den Stand der Technik repräsentiert beispielsweise das satelliten-basierte Radarsystem SAR-Lupe. Hier werden parabolische Reflektorantennen mit nur einer Speise-Antenne im Fokus oder mehreren Speiseantennen in der Fokalebene (US 6 175 326 B1) verwendet. Die Schwenkung der Antennen-Keule erfolgt mechanisch. Ein anderer Anwendungsbereich ist die Signalübertragung mittels Kommunikationssatelliten mit Reflektorantennen.

Parabolische Reflektorantennen mit fokussiertem Speise-Array, d.h. das Speise- Array befindet sich in der fokalen Ebene, sind bei einem Ausfall eines Speise- Array Elements "blind" in der jeweiligen Richtung. Diese inhärente Problematik kann nur durch redundante Auslegung des Speise-Arrays umgangen werden. Diese Option stellt für Satelliten-Radarsysteme eine starke Kostenerhöhung dar. Zudem produziert die redundante Elektronik Verluste, zum Beispiel durch zusätzlich benötigte Schalter. Desweiteren erhöht sich die Gesamtmasse des Radar Instruments.

Eine weitere Möglichkeit nach dem aktuellen Stand der Technik ist der Einsatz von planaren Array-Antennen (EP-B-1 241 487), und zwar unter anderem auch mit digitaler Strahlformung, wie es beschrieben ist in US-A-5,059,966 und PATYUCHENKO, A.; et al.: Optimization Aspects of the Reflector Antenna for the Digital Beam-Forming SAR System. In: 8th European Conference on Synthetic Aperture Radar (EUSAR), 2010, S. 954-957. Nachteilig sind hier die große Masse der Antenne und daraus resultierend hohe Kosten für Bau und Transport des Satelliten ins All.

US-A-5 202 700 beschreibt ein Bodenradar zur Luftraumüberwachung, mit dem sich Objekte (z. B. Flugzeuge) drei-dimensional detektieren lassen, wobei die Antenne des Bodenradars sehr niedrige Nebenkeulen hat. Dazu werden im Sendefall zwei breite Antennenkeulen mittels eines analogen Strahl-Schaltnetzwerks gebildet, wobei eine der beiden Keulen den obere Elevationswinkelbereich beleuchtet und die andere Keule den unteren Elevationswinkelbereich. Im Empfangsfall werden analog zehn stationäre Empfangskeulen gebildet, mit denen das Signalecho erfasst wird. Die Signale jeweils zweier benachbarter Keulen werden dabei hinsichtlich der Signalamplitude verglichen, um den Elevationswinkel und damit die Höhe des Flugobjekts zu schätzen. Der verwendete Reflektor besitzt dabei einen Bereich, der zweifach-parabolisch ist, sowie einen Bereich, der von dieser Form abweicht. Das analoge Speisearray ist von zylindrischer Form.

Aufgabe der Erfindung ist es, eine Reflektorantenne für ein Radar mit synthetischer Apertur (SAR-System) zu schaffen, das robust gegen Ausfälle von Antennenelementen oder anderen Hardware- bzw. schaltungstechnischen Komponenten des Speise-Arrays ist.

Zur Lösung dieser Aufgabe wird mit der Erfindung ein Radar mit synthetischer Apertur vorgeschlagen, das versehen ist mit den Merkmalen des Anspruchs 1. In den Unteransprüchen sind einzelne Ausgestaltungen der Erfindung angegeben.

Bei dem erfindungsgemäßen SAR-System wird als Reflektorantenne ein Reflektor eingesetzt, der eindimensional defokussiert ist und zwei längs der optischen Achse voneinander beabstandete Fokalebenen aufweist und dessen Reflektorfläche daher von der idealen rotationssymmetrischen parabolischen Form abweicht, auf der die Reflektorantennen in den oben genannten Referenzen basieren. Dabei entsteht die erfindungsgemäße Reflektorfläche durch Rotation einer Parabel um eine Achse (nämlich die optische Achse des Reflektors), wobei jedoch die Öffnung der Parabel in Abhängigkeit von dem Rotationswinkel periodisch verändert wird. Hierdurch entsteht ein Reflektor, dessen Parabellinien bei Betrachtung längs zweier rechtwinklig zueinander stehender Schnittebenen durch den Reflektor unterschiedlich weit geöffnet sind. Hierdurch weist der Reflektor - bei Betrachtung in den beiden Schnittebenen - unterschiedlich weit vom Scheitelpunkt entfernt liegende Fokalebenen auf. Die nebeneinander angeordneten Antennenelemente sind dabei längs einer Linie angeordnet, die in Höhe einer der beiden Fokalebenen verläuft. Damit sind die Antennenelemente für reflektierte Strahlung innerhalb derjenigen Ebene, in der sich die Anordnungslinie der Antennenelemente erstreckt, gewünschtermaßen defokussiert, während sie in der dazu rechtwinklig verlaufenden anderen Ebene weiterhin stark fokussiert sind.

In vorteilhafter Weiterbildung der Erfindung ist ferner vorgesehen, dass die Schnittlinie der Reflektorfläche mit der ersten (Fokal-)Ebene eine erste Parabel beschreibt, die weniger weit geöffnet ist als eine zweite Parabel, die die Schnittlinie der Reflektorfläche mit der zweiten (Fokal-)Ebene beschreibt.

Ferner kann mit Vorteil vorgesehen sein, dass die Antennenelemente zum Belichten eines streifenförmigen Belichtungsbereichs auf einer Oberfläche vorgesehen sind, wobei die Längserstreckung des Belichtungsbereichs parallel zur Aufeinanderfolge der nebeneinander angeordneten Antennenelemente gerichtet ist bzw. die Längserstreckung des streifenförmigen Belichtungsbereichs und die Aufeinanderfolge der nebeneinander angeordneten Antennenelemente innerhalb einer gemeinsamen, rechtwinklig zum streifenförmigen Belichtungsbereich verlaufenden Ebene angeordnet sind.

Die Erfindung betrifft also ein SAR-System mit einem neuen Typ von Reflektorantenne, mit der es erstmalig möglich ist, die Vorzüge planarer Gruppenantennen, nämlich die Erhaltung der Funktionsfähigkeit der Antenne bei Ausfall eines Antennenelements, mit den Vorteilen von Reflektorantennen, nämlich der Bereitstellung großer Aperturflächen, zu kombinieren. Solche Reflektorantennen können mit Hilfe leichter Materialien realisiert werden und eignen sich damit insbesondere für satellitengetragene SAR-Systeme. Sollten allerdings bei Reflektorantennen das ein oder andere Speise-Array-Element ausfallen, so ist dies nachteilig, da der von der Reflektorantenne ausgeleuchtete Bereich Schattenbereiche, in denen keine Beleuchtung stattfindet, aufweist. Planare Gruppenantennen hingegen sind insoweit vorteilhaft, als dass der Ausfall eines einzelnen Antennenelements ebengerade keine nichtbeleuchteten Bereiche zur Folge hat. Wenn man nun beide Antennensysteme miteinander kombinieren kann, wie es nach der Erfindung vorgeschlagen wird, können die jeweiligen Vorzüge beider Antennensysteme übernommen werden. Hierdurch können die Kosten von beispielsweise satellitengetragenen SAR-Systemen signifikant gesenkt werden, da teure redundante Empfangselektronik vermieden werden kann.

Anwendungsbereiche der erfindungsgemäßen Antenne sind beispielsweise Erdbeobachtungsmissionen mit SAR-Systemen bzw. alle Arten von Radarsystemen und Kommunikationssystemen, die nicht gewartet werden können. Dazu zählen in erster Linie satellitengetragene Systeme. Weitere Anwendungsgebiete sind darüber hinaus militärische und zivile Bodenradare. Bodenradarsysteme können beispielsweise für die Luftraumüberwachung und für die Wetterbeobachtung eingesetzt werden.

Die Erfindung wird nachfolgend anhand eines Ausführungsbeispiels und unter Bezugnahme auf die Zeichnung näher erläutert. Im Einzelnen zeigen dabei:

Fig. 1    schematisch ein beispielsweise satelliten-gestütztes SAR-System zur Beleuchtung eines streifenförmigen Bereichs auf beispielsweise der Erdoberfläche,

Fig. 2    eine perspektivische Darstellung des Reflektors mit Antennenelement (Speise-)Array,

Fig. 3    eine Draufsicht auf den Reflektor mit vor diesem angeordneten (Spei-se-)Array,

Fig. 4    eine Schnittansicht durch den Reflektor mit dem (Speise-)Array entlang der (X-)Ebene IV-IV der Fig. 3,

Fig. 5    eine Schnittansicht durch den Reflektor mit dem (Speise-)Array entlang der (Y-)Ebene V-V der Fig. 3,

Fig. 6    die Feldverteilung in der Ebene durch den oberen fokalen Punkt gemäß Fig. 5 für den Reflektor mit zwei Foki,

Fig. 7    die Feldverteilung in der (einzigen) fokalen Ebene für einen konventionellen parabolischen Reflektor mit lediglich einem Fokus,

Fig. 8    eine Schnittgrafik des Antennendiagramms als Funktion des Elevationswinkels für einen konventionellen parabolischen Reflektor mit lediglich einem einzigen Fokus und - in diesem Beispiel - elf Antennenelementen, wobei jedes Antennendiagramm zu einem anderen Antennenelement gehört,

Fig. 9    eine Schnittgrafik des Antennendiagramms als Funktion des Elevationswinkels für einen Reflektor mit zwei Foki gemäß den Fign. 2 bis 5 und beispielhaft wiederum elf Antennenelementen,

Fig. 10    eine Schnittgrafik des Antennendiagramms als Funktion des Elevationswinkels für einen konventionellen parabolischen Reflektor mit lediglich einem Foki und wiederum beispielhaft elf Antennenelementen, wobei ein mittleres Antennenelement ausgefallen ist, und

Fig. 11    eine Schnittgrafik des Antennendiagramms als Funktion des Elevationswinkels für einen Reflektor mit zwei Foki gemäß den Fign. 2 bis 5 und beispielhaft wiederum elf Antennenelementen, wobei ein mittleres Antennenelement ausgefallen ist.

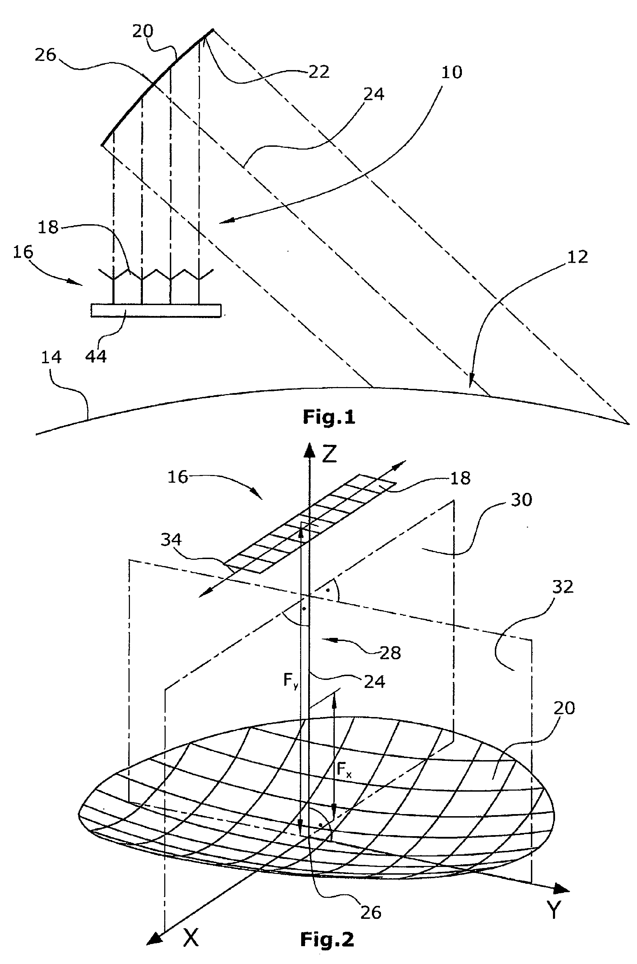

Fig. 1 zeigt, wie beispielsweise durch ein von einem Satelliten getragenes SAR-System 10 einen streifenförmigen Bereich 12 auf der Erdoberfläche 14 ausleuchtet. Das SAR-System 10 weist ein Array 16 aus Antennenelementen 18 auf. Den Antennenelementen 18 zugeordnet ist ein Reflektor 20, der eine Reflektorfläche 22, eine optische Achse 24 und einen Scheitelpunkt 26 aufweist.

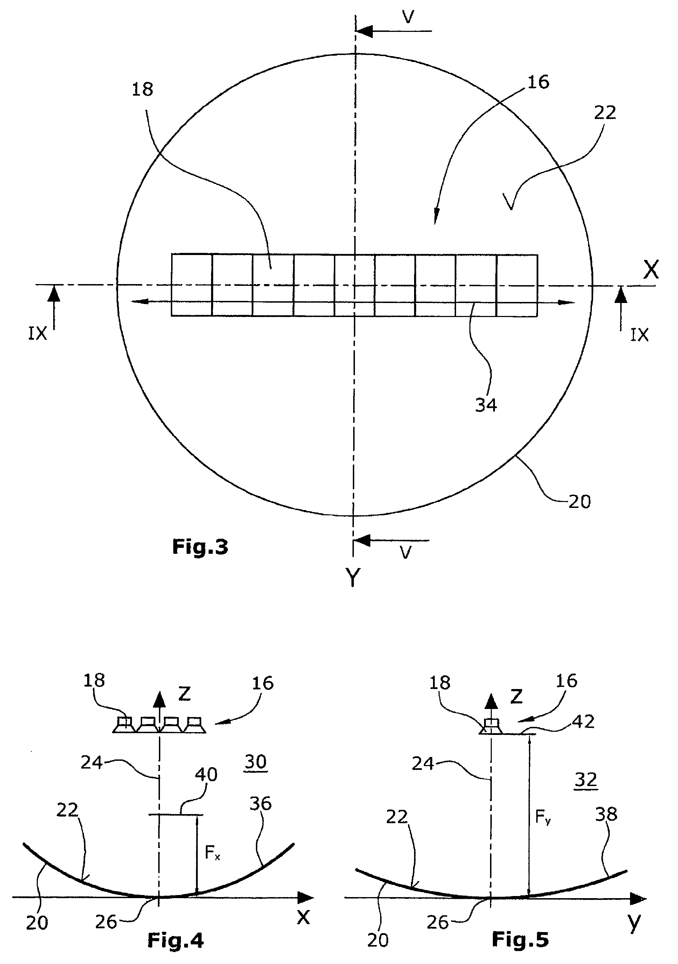

Eine perspektivische Ansicht sowie eine Draufsicht des Reflektors 20 mit dem Antennenelement-Array 16 ist in Fig. 2 perspektivisch und in Fig. 3 in Draufsicht gezeigt. Unter Zugrundelegung des kartesischen Koordinatenkreuzes gemäß Fig. 2 erstreckt sich die optische Achse 24 in Z-Richtung und bildet die Durchdringungslinie 28 einer sich in X-Achsenrichtung erstreckenden ersten (X-)Ebene 30 mit einer sich in Y-Achsenrichtung erstreckenden zweiten (Y-)Ebene 32. Die beiden Ebenen 30 und 32 stehen rechtwinklig zueinander. Zu erkennen ist, dass die Erstreckung 34 des eindimensionalen Antennenelement-Array 16 (siehe den Doppelpfeil in den Fign. 2 und 3) mit der X-Achsenerstreckung zusammenfällt.

Die Besonderheit des erfindungsgemäß verwendeten Reflektors 20 ist anhand der Schnittdarstellungen gemäß den Fign. 4 und 5 zu erkennen. Danach ist die Parabelform, die sich als in der (X-)Ebene 30 liegende Schnittlinie 36 der Fig. 4 bzw. als in der (Y-)Ebene 32 liegende Schnittlinie 38 der Fig. 5 darstellt, unterschiedlich weit geöffnet. Damit definiert der Reflektor 20 in der (X-)Ebene 30 eine erste (X-) Fokalebene 40, die näher zum Scheitelpunkt 26 des Reflektors 20 angeordnet ist als die zweite (Y-)Fokalebene 42, die sich in der (Y-)Ebene 32 bildet.

Im Folgenden sollen anhand des Ausführungsbeispiels die Vorteile des erfindungsgemäßen defokussierten Reflektors 20 dargestellt werden.

Nicht defokussierte parabolische Reflektoren werden geometrisch dadurch erzeugt, dass man eine Parabel um eine Achse rotiert (z.B. Z-Achse in Fign. 2,4 und 5). Eine Eigenschaft der Reflektorfläche 22 besteht darin, eine anti-parallel zur z-Achse einfallende ebene Welle im sogenannten fokalen Punkt, kurz Fokus, zu bündeln. Eine Möglichkeit der Defokussierung besteht darin, den Reflektor mit zwei fokalen Punkten (Fokalebenen 40,42) zu konstruieren. Der geometrische Ort der Reflektorfläche 22 kann in kartesischen Koordinaten mit der Gleichung

$$z = \frac{x^2}{4F_x} + \frac{y^2}{4F_y}$$

beschrieben werden. Hier sind $F_x$ und $F_y$ die fokalen Längen, wie in den Fign. 4 und 5 dargestellt.

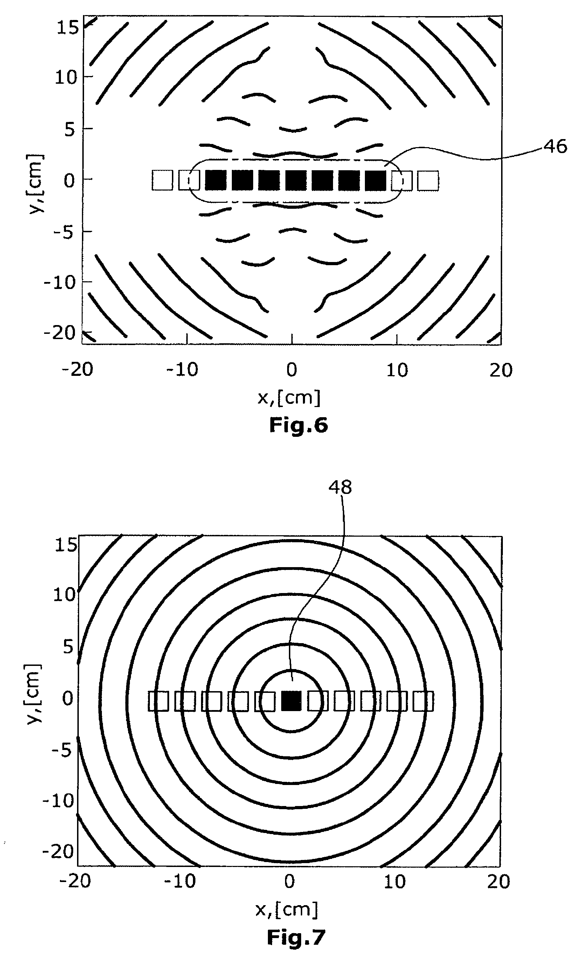

Platziert man das Antennenelement-Array in einem der beiden Foki (z.B. im oberen Fokus (siehe Fig. 5)), wird das gestreute Feld einer einfallenden ebene Welle nicht mehr in einer kleinen Umgebung um den fokalen Punkt konzentriert, sondern in einer Dimension (z.B. X-Dimension) über einen größeren Bereich verteilt, während das Feld in der orthogonalen Richtung (Y-Dimension) fokussiert bleibt (siehe Fig. 6). Dies ist in den Fign. 6 und 7 durch die schwarzen Quadrate angedeutet, die die jeweilige Rückstrahlung empfangenden Antennenelemente 18 zeigen. Die zu Grunde liegende Idee besteht darin, den Antennen-Strahl nur in einer Dimension zu schwenken. Daher wird der Überlapp zwischen den einzelnen Antennendiagrammen auch nur in dieser Dimension benötigt. Dies wird anhand der Feldverteilungen in den Abbildungen in den Fign 6 und 7 deutlich. In Fig. 7 ist die Feldverteilung für einen X-Band Reflektor mit konventioneller parabolischer Reflektorfläche, d.h. mit nur einem Fokus, dargestellt. Der Reflektor hat einen Durchmesser von 7m mit einer fokalen Länge von $F_x = F_y = 5$m. Die dargestellte Feldebene ist die fokale Ebene z = 5m. Die Quadrate repräsentieren die Elemente des Antennenelement-Arrays, wobei das schwarze Quadrat das beleuchtete Antennenelement symbolisiert. In Fig. 6 ist die Feldverteilung für einen Reflektor mit demselben Durchmesser aber mit zwei Foki ($F_x = 4.9$m und $F_y = 5.1$m) dargestellt. Die Feldebene befindet sich im oberen fokalen Punkt bei z = 5.1m. Hier wird deutlich, dass mehrere Antennenelemente 18 des Arrays 16 gleichzeitig beleuchtet werden.

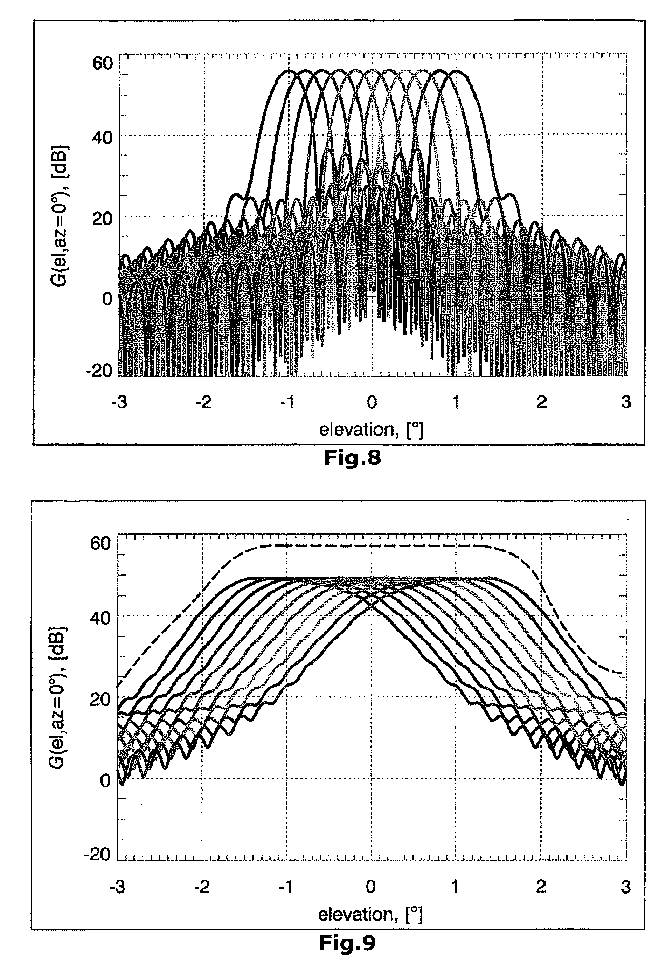

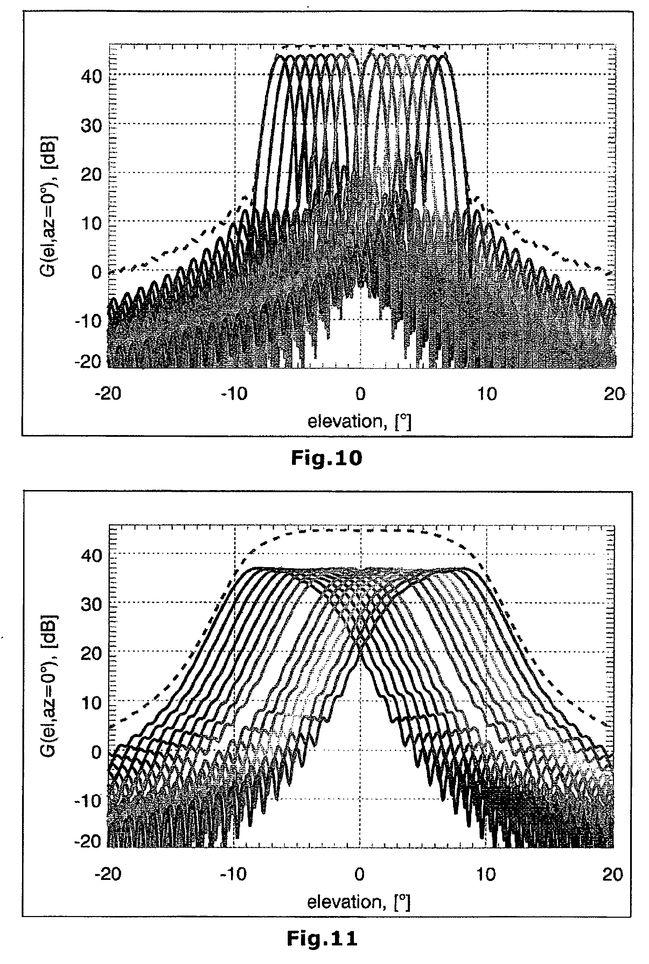

Die dazugehörigen Antennendiagramme für ein lineares Antennenelement-Array mit elf Elementen sind in Fig. 8 dargestellt, und zwar als Schnitt durch das Antennendiagramm als Funktion des Elevationswinkels bei Verwendung eines konventionellen parabolischen Reflektor. Jedes Antennendiagramm gehört zu einem Antennenelement des Arrays. Hier wird offensichtlich, dass sich die einzelnen Diagramme nur schwach überlappen. Fällt eines der Antennenelemente aus, wird dieser Bereich nicht mehr ausreichend beleuchtet. In Fig. 8 sind die Antennendiagramme für den defokussierten Reflektor 20 gemäß den Fign. 2 bis 5 dargestellt. Jede Einzelcharakteristik hat zwar einen geringeren Gewinn; ein erhöhter Gewinn kann jedoch durch Strahlformung digital erzeugt werden (siehe die gestrichelte Kurve in Fig. 9). Hierzu ist eine Vorrichtung 44 zur digitalen Strahlformung vorgesehen. Der Vorteil dieses Antennen-Konzepts nach den Fign. 2 bis 5 besteht darin, dass bei einem Ausfall eines Antennenelements der betroffene Winkelbereich immer noch ausreichend durch Nachbarelemente beleuchtet wird. Dies ist anhand der Fign. 10 und 11 verdeutlicht. In Fig. 10 sind die Antennendiagramme eines konventionellen parabolischen Reflektors mit einer einzigen Fokalebene gezeigt, wobei ein mittleres Antennenelement ausgefallen ist und sich damit in der Einhüllenden (siehe gestrichelte Linie) eine Einbuchtung ergibt. Fig. 11 zeigt, dass sich der Ausfall des mittleren Antennenelements bei Verwendung des erfindungsgemäßen Reflektors nicht nennenswert auf die Überlagerung (gestrichelte Linie) der Antennendiagramme auswirkt, da nämlich auf Grund der gezielten Defokussierung die zum ausgefallenen Antennenelement benachbarten Antennenelemente Strahlung empfangen.

Das erfindungsgemäße Antennen-Konzept kann im Prinzip überall dort eingesetzt werden, wo eine hohe Zuverlässigkeit für das Gesamtsystem verlangt wird. Das betrifft vorwiegend Antennen-Systeme die nicht gewartet werden können, wie zum Beispiel von Satelliten getragenen Antennen.

Mit dem zuvor beschriebenen Reflektorkonzept lässt sich eine Lösung des Redundanz-Problems, und zwar durch eine gezielte Defokussierung, angeben. Hierzu wurde die dreidimensionale Feldverteilung, die sich aus der Streuung einer ebenen Welle mit dem Reflektor ergibt, im Bereich der fokalen Ebene simuliert. Durch Variation der Reflektorform lässt sich eine Verteilung des elektromagnetischen Feldes über einen größeren Bereich erzielen (siehe den Bereich 46 in Fig. 6 gegenüber dem Bereich 48 in Fig. 7). Auf diese Weise wird sichergestellt, dass mehrere Elemente des Antennenelement-Arrays, angedeutet durch die schwarzen Quadrate in Fig. 6, einen Teil der Feldenergie aufnehmen. Umgekehrt kann man aus Reziprozitätsgründen daraus ableiten, dass die elektromagnetische Leistung über einen breiteren Winkelbereich abgestrahlt wird (Fig. 9). Dies hat zur Folge, dass benachbarte Elemente des Antennenelement-Arrays einen stärker überlappenden Winkelbereich beleuchten. Bei einem Ausfall eines Elements ist damit gewährleistet, dass dieser Winkelbereich immer noch "sichtbar" bleibt.

Die Erfindung entfaltet ihr volles Potential in Verbindung mit digitaler Strahlformung. Bei Anwendungen wie der satelliten-gestützten Kommunikation wird generell eine Defokussierung des Reflektors vermieden, weil damit ein Verlust an Antennengewinn einhergeht. Bei solchen Anwendungen wird versucht, den Antennenstrahl so zu optimieren, dass beispielsweise ein Kontinent optimal ausgeleuchtet wird. Die Aufgabe besteht also darin, die Antennencharakteristik gleichzeitig für ein ganzes Kontinuum an Richtungen zu optimieren. Folglich wird jede Richtung mit einem niedrigen Gewinn beleuchtet. Im Gegensatz dazu soll bei synthetischen Apertur Radaren die Antennenkeule zu einem Zeitpunkt nur für eine Richtung optimiert werden. Im nächsten Zeitschritt kommt das Signal aus einer anderen Richtung und es wird ein neuer Antennenstrahl berechnet. Insofern stellt der Verlust an Gewinn eines einzelnen Antennenelements für die Anwendung im Bereich synthetischer Apertur-Radare kein Problem dar, weil für jede Richtung eine Antennenkeule mit hohem Gewinn digital synthetisiert wird.

Charakteristisch für die Neuheit der Erfindung ist die geometrische Form des Reflektors, die von den gängigen Reflektorformen abweicht.

## BEZUGSZEICHENLISTE

| 10 | SAR-System |
| 12 | Belichtungsbereich |
| 14 | Erdoberfläche, |
| 16 | Antennenelement-Array |
| 18 | Antennenelemente |
| 20 | Reflektor |
| 22 | Reflektorfläche |
| 24 | optische Achse |
| 26 | Scheitelpunkt der Reflektorfläche |
| 28 | Durchdringungslinie der (X-) und (Y-)Ebenen |
| 30 | (X-)Ebene |
| 32 | (Y-)Ebene |
| 34 | Erstreckung der Aufeinanderfolge der Antennenelemente |
| 36 | Schnittlinie des Reflektors mit der (X-)Ebene |
| 38 | Schnittlinie des Reflektors mit der (Y-)Ebene |
| 40 | (X-)Fokalebene |
| 42 | (Y-)Fokalebene |
| 44 | Vorrichtung zur digitalen Strahlformung |
| 46 | Bereich der Verteilung des elektromagnetischen Feldes |
| 48 | Bereich der Verteilung des elektromagnetischen Feldes |

## Patentansprüche

1. Radar mit synthetischer Apertur, mit

   - einem Reflektor (20) mit einer Reflektorfläche (22) und einem Scheitelpunkt (26) sowie einer sich von diesem aus erstreckenden optischen Achse (24) und
   - mehreren nebeneinander in einer Reihe angeordneten Antennenelementen (18) zum Aussenden von Radar-Sendesignalen und zum Empfangen von durch Reflektion an einer Oberfläche (14) entstandenen Radar-Empfangssignalen,

   **dadurch gekennzeichnet,**

   - **dass** der Reflektor (20) als eindimensional defokussierter Reflektor (20) mit zwei Fokalebenen (40,42) ausgebildet ist,
   - **dass** die optische Achse (24) mit der Durchdringungslinie (28) zweier zueinander rechtwinkliger, gedachter Ebenen, nämlich einer ersten (X-)Ebene (30) und einer zweiten (Y-)Ebene (32) zusammenfällt,
   - **dass** der Reflektor (20) in der ersten (X-)Ebene (30) eine zu dieser sowie zur optischen Achse (24) rechtwinklig verlaufende erste (X-) Fokalebene (40) aufweist,
   - **dass** der Reflektor (20) in der zweiten (Y-)Ebene (32) eine zu dieser sowie zur optischen Achse rechtwinklig verlaufende zweite (Y-) Fokalebene (42) aufweist,
   - **dass** die zweite (Y-)Fokalebene (42) einen größeren Abstand vom Scheitelpunkt aufweist als die erste (X-)Fokalebene (40),
   - **dass** die Antennenelemente (18) bei Betrachtung der ersten (X-)Ebene (30) des Reflektors (20) längs einer in der ersten (X-)Ebene (30) verlaufenden (X-)Linie (34) nebeneinander angeordnet sind,

- wobei die (X-)Linie (34) in Höhe der zweiten (Y-)Fokalebene (42) verläuft, und

- **dass** eine Vorrichtung (44) zur digitalen Strahlformung vorgesehen ist.

2. Radar mit synthetischer Apertur nach Anspruch 1, **dadurch gekennzeichnet, dass** die Schnittlinie (36) der Reflektorfläche (22) mit der ersten (X-) Ebene (30) eine erste (X-) Parabel beschreibt, die weniger weit geöffnet ist als eine zweite (Y-) Parabel, die die Schnittlinie (38) der Reflektorfläche (22) mit der zweiten (Y-)Ebene (32) beschreibt.

3. Radar mit synthetischer Apertur nach Anspruch 1 oder 2, **dadurch gekennzeichnet, dass** die Antennenelemente (18) zum Beleuchten eines streifenförmigen Beleuchtungsbereichs (12) auf einer Oberfläche (14) vorgesehen sind, wobei die Längserstreckung des Beleuchtungsbereichs (12) parallel zur Aufeinanderfolge der nebeneinander angeordneten Antennenelemente (18) gerichtet ist bzw. die Längserstreckung des streifenförmigen Beleuchtungsbereichs (12) und die Aufeinanderfolge der nebeneinander angeordneten Antennenelemente (18) innerhalb einer gemeinsamen, rechtwinklig zum streifenförmigen Beleuchtungsbereich (12) verlaufenden Ebene angeordnet sind.

**Claims**

1. A synthetic aperture radar, comprising

- a reflector (20) having a reflector surface (22), a vertex (26), and an optical axis (24) extending outwards therefrom, and

- a plurality of antenna elements (18) arranged side by side and in a row, for transmitting radar transmission signals and for receiving radar reception signals generated by reflection on a surface (14),

**characterized in**

- **that** the reflector (20) is designed as a one-dimensionally defocused reflector (20) having two focal planes (40, 42),

- **that** the optical axis (24) coincides with the intersection line (28) of two imaginary planes extending at right angles to one another, specifically a first (X-) plane (30) and a second (Y-) plane (32),

- **that** the reflector (20) has, in the first (X-) plane (30), a first (X-) focal plane (40) that extends at right angles thereto and to the optical axis (24),

- **that** the reflector (20) has, in the second (Y-) plane (32), a second (Y-) focal plane (42) which extends at right angles thereto and to the optical axis,

- **that** the second (Y-) focal plane (42) is at a greater distance from the vertex than the first (X-) focal plane (40),

- **that**, when viewing the first (X-) plane (30) of the reflector (20), the antenna elements (18) are arranged side by side along an (X-) line (34) extending in the first (X-) plane (30),

- said (X-) line (34) extending at the height of the second (Y-) focal plane (42), and

- **that** a device (44) for digital beam formation is provided.

2. The synthetic aperture radar of claim 1, **characterized in that** the line of intersection (36) of the reflector surface (22) with the first (X-) plane (30) describes a first (X-) parabola which is opened less wide than a second (Y-) parabola describing the line of intersection (38) of the reflector surface (22) with the second (Y-) plane (32).

3. The synthetic aperture radar of claim 1 or 2, **characterized in that** the antenna elements (18) are provided for illuminating a strip-like illumination area (12) on a surface (14), wherein the lengthwise dimension of the illumination area (12) is oriented parallel to the sequence of the antenna elements (18) arranged side by side, and respectively the lengthwise dimension of the strip-like illumination area (12) and the sequence of the antenna elements (18) arranged side by side are located in a common plane extending at a right angle to the strip-like illumination area (12).

**Revendications**

1. Radar à ouverture synthétique, comprenant

- un réflecteur (20) présentant une surface de réflecteur (22) et un apex (26) ainsi qu'un axe optique (24) s'étendant à partir de celui-ci, et

- plusieurs éléments d'antenne (18) disposés côte à côte sur une rangée, destinés à émettre des signaux d'émission radar et à recevoir des signaux de réception radar générés par réflexion sur une surface (14),

**caractérisé en ce que**

- le réflecteur (20) est conçu en tant que réflecteur (20) unidimensionnel défocalisé comprenant deux plans focaux (40, 42),

- l'axe optique (24) coïncide avec la ligne de pénétration (28) de deux plans imaginaires perpendiculaires l'un à l'autre, à savoir un premier plan (X) (30) et un second plan (Y) (32),
- le réflecteur (20) présente, dans le premier plan (X) (30), un premier plan focal (X) (40) s'étendant perpendiculairement à celui-ci ainsi qu'à l'axe optique (24),
- le réflecteur (20) présente, dans le second plan (Y) (32), un second plan focal (Y) (42) s'étendant perpendiculairement à celui-ci ainsi qu'à l'axe optique,
- le second plan focal (Y) (42) présente une plus grande distance par rapport à l'apex que le premier plan focal (X) (40),
- les éléments d'antenne (18), lorsque l'on considère le premier plan (X) (30) du réflecteur (20), sont disposés les uns à côté des autres le long d'une ligne (X) (34) s'étendant dans le premier plan (X) (30),
- la ligne (X) (34) s'étendant à hauteur du second plan focal (Y) (42), et
- **en ce qu'**est prévu un dispositif (44) de conformation de faisceau numérique.

2. Radar à ouverture synthétique selon la revendication 1, **caractérisé en ce que** la ligne d'intersection (36) de la surface de réflecteur (22) avec le premier plan X (30) décrit une première parabole (X) qui est ouverte moins large qu'une seconde parabole (Y) qui décrit la ligne d'intersection (38) de la surface de réflecteur (22) avec le second plan (Y) (32).

3. Radar à ouverture synthétique selon la revendication 1 ou 2, **caractérisé en ce que** les éléments d'antenne (18) sont prévus pour l'éclairage d'une zone d'éclairage (12) en forme de bande sur une surface (14), l'étendue longitudinale de la zone d'éclairage (12) étant orientée parallèlement à la succession des éléments d'antenne (18) disposés côte à côte, ou bien l'étendue longitudinale de la zone d'éclairage (12) en forme de bande et la succession des éléments d'antenne (18) disposés côte à côte étant disposées à l'intérieur d'un plan commun s'étendant à angle droit par rapport à la zone d'éclairage (12) en forme de bande.

**Fig.1**

**Fig.2**

V

18                    16        22

IX                                                    X

                                                     IX

34

20

**Fig.3**

Y

V

18    Z    16

24        40    30    36

22                              38

20    26        **Fig.4**    X

18    Z    16
                           42
24              32

22                    38

20    26    **Fig.5**    y

F$_x$

F$_y$

**Fig.6**

**Fig.7**

**Fig.8**

**Fig.9**

**Fig.10**

**Fig.11**

**IN DER BESCHREIBUNG AUFGEFÜHRTE DOKUMENTE**

**In der Beschreibung aufgeführte Patentdokumente**

- US 6175326 B1
- US 20070194977 A
- EP 1241487 B
- US 5059966 A
- US 5202700 A

**In der Beschreibung aufgeführte Nicht-Patentliteratur**

- **PATYUCHENKO, A. et al.** Optimization Aspects of the Reflector Antenna for the Digital Beam-Forming SAR System. *8th European Conference on Synthetic Aperture Radar (EUSAR),* 2010, 954-957